(19) Europäisches Patentamt
European Patent Office
Office européen des brevets

(11) **EP 2 706 455 B1**

(12) **FASCICULE DE BREVET EUROPEEN**

(45) Date de publication et mention
de la délivrance du brevet:
**25.03.2015 Bulletin 2015/13**

(51) Int Cl.:
***G06F 7/72*** *(2006.01)*

(21) Numéro de dépôt: **13183540.7**

(22) Date de dépôt: **09.09.2013**

(54) **Procédé de test de la sécurité d'un dispositif électronique vis-à-vis d'une attaque, et diispositif électronique mettant en oeuvre des contre-mesures**

Sicherheitstestverfahren einer elektronischen Vorrichtung gegen einen Angriff, und elektronische Vorrichtung, die Gegenmaßnahmen einleitet

Method for testing the security of an electronic device against an attack, and electronic device implementing countermeasures

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.09.2012 FR 1258489**

(43) Date de publication de la demande:
**12.03.2014 Bulletin 2014/11**

(73) Titulaire: **Oberthur Technologies
92700 Colombes (FR)**

(72) Inventeurs:
• **Barbu, Guillaume
92700 Colombes (FR)**
• **Batistello, Alberto
92700 Colombes (FR)**
• **Giraud, Christophe
92700 Colombes (FR)**
• **Renner, Soline
92700 Colombes (FR)**

(74) Mandataire: **Orsini, Fabienne
Coralis
14/16, rue Ballu
75009 Paris (FR)**

(56) Documents cités:
**US-A1- 2010 223 478**

• **Johannes Blömer ET AL: "New Partial Key Exposure Attacks on RSA", Advances in Cryptology, CRYPTO 2003. Lecture Notes in Computer Science, vol. 2729, 1 janvier 2003 (2003-01-01), pages 27-43, XP055076976, Extrait de l'Internet: URL:http://www.iacr.org/archive/ crypto2003 /27290027/27290027.pdf [extrait le 2013-08-29]**
• **Marc Witteman: "A DPA attack on RSA in CRT mode", Riscure, The Netherlands, 1 janvier 2011 (2011-01-01), pages 1-9, XP055077282, Extrait de l'Internet: URL:http://www.riscure.com/ archive/DPA_att ack_on_RSA_in_CRT_ mode.pdf [extrait le 2013-09-02]**

**Description**

## 1. DOMAINE DE L'INVENTION

Le domaine de l'invention est celui de la cryptographie.

Plus précisément, l'invention concerne une technique de test de la sécurité d'un dispositif électronique vis-à-vis d'une attaque par canaux auxiliaires combinant une attaque par injection de fautes et une analyse de consommation (et/ou une analyse d'émanations électromagnétiques), ainsi qu'une technique de protection visant à empêcher la divulgation d'éléments secrets stockés par le dispositif électronique lorsqu'une telle attaque est mise en oeuvre.

L'invention a de nombreuses applications, telles que par exemple dans le domaine des cartes à puces qui sont utilisées dans de nombreux pans de l'industrie (dans le domaine bancaire, de l'identité, de la téléphonie, etc...).

Plus généralement, elle peut s'appliquer dans tous les cas où un dispositif électronique peut être manipulé afin de mettre en oeuvre des attaques par canaux auxiliaires.

## 2. ARRIÈRE-PLAN TECHNOLOGIQUE

Traditionnellement, lorsqu'un procédé de traitement cryptographique (comme une signature numérique) est implémenté sur un dispositif électronique (soit sous la forme d'un matériel dédié, soit sous la forme d'un ensemble d'instructions logicielles à exécuter par un processeur compris dans le dispositif électronique), il est important de prendre en compte les contraintes induites par l'existence des deux grandes classes d'attaques (i.e les attaques par canaux auxiliaires, et les attaques par injection de faute(s)) auxquelles tous les dispositif électroniques sont vulnérables.

Les attaques par canaux auxiliaires consistent à observer le fonctionnement normal d'un dispositif électronique sans le détériorer. Il s'agit là d'attaques non invasives qui consistent à observer les effets physiques liés à des calculs sur des modules embarqués tels que le temps d'exécution, le rayonnement électromagnétique ou encore la consommation de courant pour retrouver les données secrètes manipulées au cours de l'exécution d'un procédé de traitement cryptographique. Les attaques dites SPA (pour « *Simple PowerAnalysis* » en anglais), DPA (pour « *Differential Power Analysis* » en anglais), SEMA (pour « *Simple ElectroMagnetic Analysis* » en anglais), et DEMA (pour « *Differential ElectroMagnetic Analysis* » en anglais) sont des exemples d'attaques par canaux auxiliaires.

Les attaques par injection de faute(s) consistent à perturber le bon fonctionnement d'un dispositif électronique et à analyser une sortie erronée pour obtenir de l'information sur les données secrètes stockées dans ce dispositif.

De manière générale, l'Homme du métier cherche à empêcher la réalisation de telles attaques en intégrant des contre-mesures particulières lors de l'implémentation d'un procédé de traitement cryptographique.

Pour se protéger contre les attaques par injection de faute(s), il est commun soit de doubler le calcul puis de vérifier l'égalité des deux résultats, soit de rajouter une opération vérifiant l'intégrité du calcul à protéger.

Ainsi, dans le cas de figure où un procédé de signature numérique (tel que le procédé de signature dit RSA (pour « *Rivest Shamir et Adleman* »), ou l'une de ses variantes) doit être implémenté, la technique la plus efficace pour contrer les attaques par injection de faute consiste à vérifier le résultat de la signature en utilisant la clé publique si cette dernière est disponible.

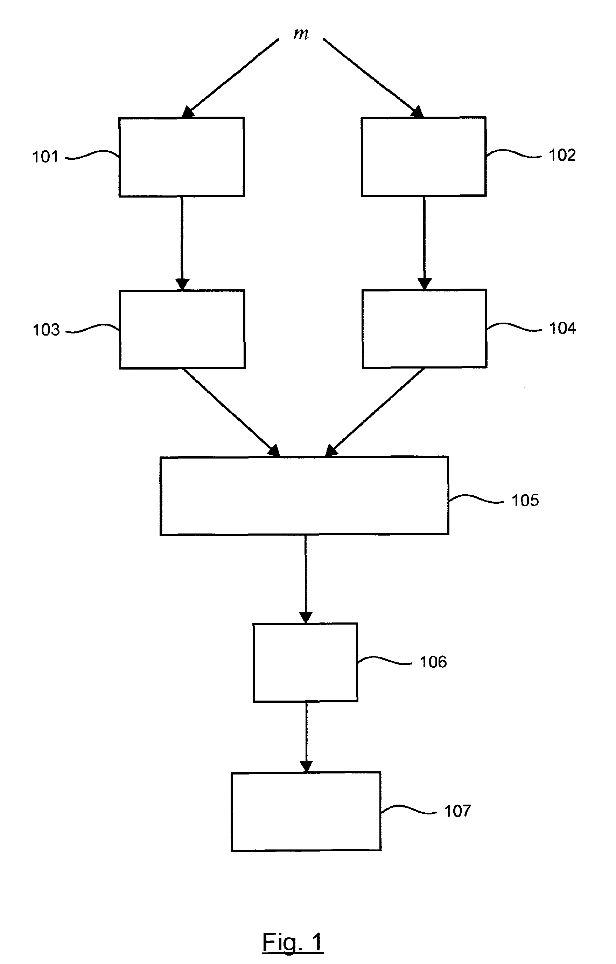

Une description d'une implémentation générique du procédé de signature numérique dit RSA-CRT (pour « *Chinese Remainder Theorem* ») protégé, selon les techniques connues de l'état de la technique, contre les deux classes d'attaques susmentionnées est décrite en relation avec la figure 1.

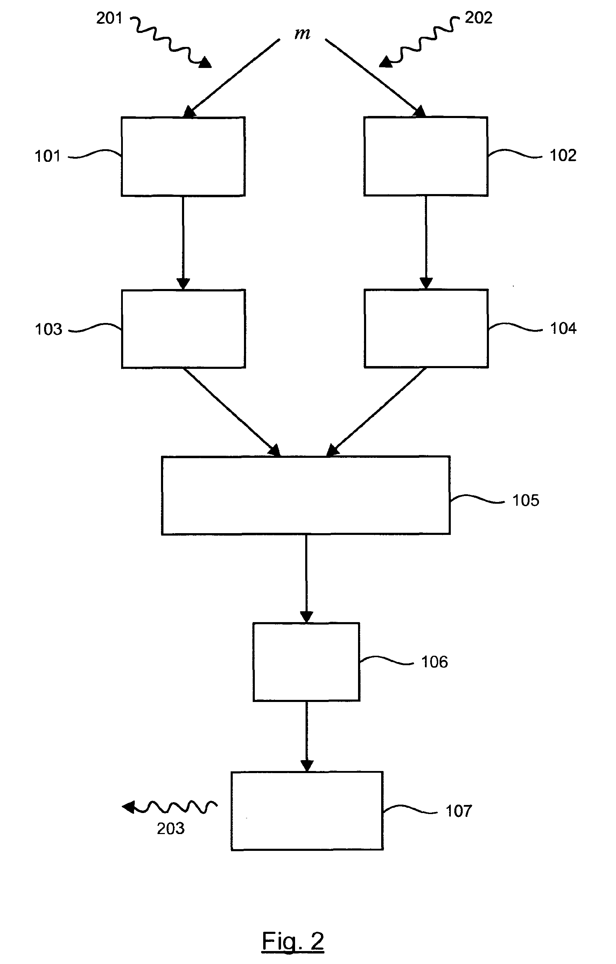

Cependant, il s'avère qu'un tel procédé de signature numérique est sensible à une attaque combinant une attaque par canaux auxiliaires et une attaque par injection de faute(s). La description du problème technique formulé par les inventeurs est décrite en lien avec la figure 2 de la présente demande. Il convient de noter qu'il n'était pas évident pour l'homme du métier de détecter et de formuler ce problème de sécurité inhérent à l'utilisation du procédé de signature numérique mentionné précédemment.

L'invention est donc au moins en partie une invention de problème, correspondant à la détection de cette faille de sécurité.

Il convient de noter que ce problème de sécurité existe dans de nombreuses implémentations d'un procédé de signature numérique considéré comme sécurisé, comme par exemple dans celle décrite dans le document US 2010/0223478.

## 3. OBJECTIFS DE L'INVENTION

L'invention, dans au moins un mode de réalisation, a notamment pour objectif de fournir une technique de test de sécurité d'un dispositif électronique afin de garantir un niveau de sécurité supposé du dispositif électronique.

Au moins un mode de réalisation de l'invention a également pour objectif de fournir une technique de protection d'un dispositif électronique contre une nouvelle attaque combinant une attaque par canaux auxiliaire et une attaque par injection de faute.

Un autre objectif d'au moins un mode de réalisation de l'invention est de fournir une telle technique qui soit facile à mettre en oeuvre, et qui ne nécessite que peu de ressources supplémentaires (en mémoire, ou en temps d'exécution).

## 4. EXPOSÉ DE L'INVENTION

Dans un mode de réalisation particulier de l'invention, il est proposé un procédé de test de sécurité d'un dispositif électronique vis-à-vis d'une combinaison d'une attaque par canaux auxiliaires et d'une attaque par injection de fautes qui est mise en oeuvre lors d'une exécution d'un procédé de traitement cryptographique comprenant une étape de signature d'un message à partir d'au moins un paramètre secret, ladite étape de signature mettant en oeuvre une recombinaison d'au moins deux valeurs intermédiaires selon le théorème des restes chinois, et une étape de vérification de ladite signature à partir d'au moins un exposant public. Un tel procédé de test est remarquable en ce qu'il comprend :

- une étape de transmission d'une pluralité de messages à signer par ledit dispositif électronique ;
- une étape de perturbation de chaque message, comprenant une modification dudit message par une introduction d'une erreur identique pour chaque message, avant l'exécution d'une étape de détermination d'une des valeurs intermédiaires ;
- une étape d'analyse de mesures physiques obtenues pendant ladite étape de vérification de ladite signature en fonction dudit message à signer, de ladite erreur identique pour chaque message et d'une supposition d'une valeur d'une partie dudit au moins un paramètre secret.

Selon une caractéristique particulière, un tel procédé de test est remarquable en ce que ladite étape de signature correspond à une étape d'exécution du procédé de traitement cryptographique RSA-CRT.

Selon une caractéristique particulière, un tel procédé de test est remarquable en ce que ladite étape de signature correspond à une étape d'exécution de variantes du procédé de traitement cryptographique RSA-CRT.

Selon une caractéristique particulière, un tel procédé de test est remarquable en ce que ladite étape d'analyse de mesures physiques comprend une étape de détermination d'un coefficient de corrélation entre lesdites mesures physiques obtenues et une estimation d'une variable $m + \tilde{u} \bmod N$, où $\tilde{u}$ est ladite supposition d'une valeur d'une partie dudit au moins un paramètre secret, ledit coefficient étant maximal lorsque $\tilde{u} = f(\varepsilon, p, i_p, N)$ ou lorsque $\tilde{u} = f(\varepsilon, q, i_q, N)$, selon la valeur intermédiaire perturbée par l'exécution de ladite étape de perturbation, où $m$ correspond audit message, $\varepsilon$ correspond à une représentation de ladite erreur introduite lors de l'exécution de ladite étape de perturbation, $p$ et $q$ correspondent à des nombres premiers qui sont des paramètres du procédé de traitement cryptographique RSA-CRT, $N$ correspond au produit des nombres premiers $p$ et $q$, $i_p = p^{-1} \bmod q$ et $i_q = q^{-1} \bmod p$, l'opération $mod$ correspond à une opération de réduction modulaire, et la fonction $f$ est définie par l'une des deux équations suivantes: $f(a,b,c,d) = a.b.c \bmod d$ et $f(a,b,c,d) = (a.b.c \bmod d) -d$.

Selon une caractéristique particulière, un tel procédé de test est remarquable en ce que ladite supposition d'une valeur d'une partie dudit au moins un paramètre secret est réalisée octet par octet.

Selon une caractéristique particulière, un tel procédé de test est remarquable en ce que lorsqu'on obtient $t$ bits de poids faible du nombre $f(\varepsilon,p,i_p,N)$ ou du nombre $f(\varepsilon,q,i_q,N)$, les autres bits sont obtenus via une étape de résolution d'une équation polynômiale $P(\varepsilon, x) = x^2 + c(2^{t+1}k - 2^t\varepsilon)x + ck(k - \varepsilon) = 0 \bmod N$, où $c = 2^{-2t} \bmod N$, et où $k$ vérifie $f(a,b, c, N) = 2^t x + k \bmod N$.

Selon une caractéristique particulière, un tel procédé de test est remarquable en ce que lorsque ladite erreur $\varepsilon$ est connue et lorsque $t > \frac{1}{2} log_2(N)$, ladite équation polynômiale est résolue via une utilisation de l'algorithme LLL.

Selon une caractéristique particulière, un tel procédé de test est remarquable en ce que lorsque ladite erreur $\varepsilon$ est inconnue, et lorsque $t > \frac{1}{2} log_2(N) + s$ où $s$ est une taille en bits d'une représentation de ladite erreur $\varepsilon$, ladite équation polynômiale est résolue via une utilisation de l'algorithme LLL.

Dans un mode de réalisation particulier de l'invention, il est proposé un dispositif électronique comprenant des moyens de traitement cryptographique comprenant des moyens permettant de réaliser une signature d'un message à partir d'au moins un paramètre secret, lesdits moyens permettant de réaliser une signature comprennent en outre des moyens de recombinaison d'au moins deux valeurs intermédiaires selon le théorème des restes chinois, et des moyens de vérification de ladite signature à partir d'au moins un exposant public. Un tel dispositif électronique est remarquable en ce qu'il comprend des moyens de confusion mis en oeuvre durant une utilisation des moyens de traitement cryptographique, lesdits moyens de confusion permettant d'empêcher l'établissement d'une relation entre un résultat obtenu suite à l'utilisation des moyens de vérification, ledit message, une erreur introduite dans ledit message lorsque celui-ci est utilisé pour établir une desdites deux valeurs intermédiaires, et une partie d'au moins un paramètre secret, ladite relation permettant de réaliser une attaque par analyse de mesures de paramètres physiques émis par ledit dispositif électronique.

Selon une caractéristique particulière, un tel dispositif électronique est remarquable en ce que lesdits moyens de vérification comprennent lesdits moyens de confusion.

Selon une caractéristique particulière, un tel dispositif électronique est remarquable en ce que lesdits moyens de vérification comprennent :

- des moyens de détermination d'une variable égale à $((S'^e + rand - m) \bmod r_1 N) \bmod N$ où $S'$ est un résultat obtenu suite à l'utilisation des moyens permettant de réaliser une signature d'un message $m$, $N$ est un module public, $rand$ est un nombre aléatoire plus petit que $N$, $r_1$ est un nombre aléatoire et $e$ est l'exposant public;
- des moyens de comparaison de ladite variable obtenue par l'utilisation des moyens de détermination avec le nombre aléatoire $rand$ ;
- des moyens de détection d'une attaque par injection de faute, qui transmettent une information de détection d'une attaque par injection de faute si des nombres comparés par lesdits moyens de comparaison sont différents.

Selon une caractéristique particulière, un tel dispositif électronique est remarquable en ce que lesdits moyens de vérification comprennent :

- des moyens de détermination d'une variable égale à $((S'^{e r_2} - m^{r_2}) \bmod N)$ où $S'$ est un résultat obtenu suite à l'utilisation des moyens permettant de réaliser une signature d'un message $m$, $N$ est un module public, $r_2$ est un nombre aléatoire et $e$ est l'exposant public ;
- des moyens de comparaison de ladite variable obtenue par l'utilisation des moyens de détermination avec zéro ;
- des moyens de détection d'une attaque par injection de faute, qui transmettent une information de détection d'une attaque par injection de faute si des nombres comparés par lesdits moyens de comparaison sont différents.

Selon une caractéristique particulière, un tel dispositif électronique est remarquable en ce que lesdits moyens de vérification comprennent :

- des moyens de détermination d'une variable égale à $(S'^e \bmod r_3 N) \bmod r_3$ où $S'$ est un résultat obtenu suite à l'utilisation des moyens permettant de réaliser une signature d'un message $m$, $N$ est un module public, $r_3$ est un nombre aléatoire et $e$ est l'exposant public;
- des moyens de comparaison de ladite variable obtenue par l'utilisation des moyens de détermination avec $m \bmod r_3$;
- des moyens de détection d'une attaque par injection de faute, qui transmettent une information de détection d'une attaque par injection de faute si des nombres comparés par lesdits moyens de comparaison sont différents.

Selon une caractéristique particulière, un tel dispositif électronique est remarquable en ce que lesdits moyens de confusion sont utilisés avant les moyens permettant de réaliser une signature d'un message, et en ce qu'ils comprennent des moyens de détermination d'un message $m'$ qui est égal à $(m + r_4 N) \bmod r_5 N$ où $m$ est le message à signer, $N$ est un module public, et les nombres $r_4$, $r_5$ sont des nombres aléatoires.

Selon une caractéristique particulière, un tel dispositif électronique est remarquable en ce que les moyens permettant de réaliser une signature d'un message sont capable de réaliser une signature selon le procédé dit RSA-CRT.

Dans un autre mode de réalisation de l'invention, il est proposé un procédé de sécurisation d'un procédé de traitement cryptographique comprenant une étape de signature d'un message à partir d'au moins un paramètre secret, ladite étape de signature comprenant une étape de recombinaison d'au moins deux valeurs intermédiaires selon le théorème des restes chinois, et une étape de vérification de ladite signature à partir d'au moins un exposant public. Le procédé de sécurisation est remarquable en ce qu'il comprend une étape de confusion permettant d'empêcher l'établissement d'une relation entre un résultat obtenu suite à l'exécution de l'étape de vérification, ledit message, une erreur introduite dans ledit message lorsque celui-ci est utilisé pour établir une desdites deux valeurs intermédiaires, et une partie d'au moins un paramètre secret, ladite relation permettant de réaliser une attaque par analyse de mesures de paramètres physiques émis par ledit dispositif électronique.

Selon une caractéristique particulière, un tel procédé de sécurisation est remarquable en ce que ladite étape de confusion est réalisée au cours de l'étape de vérification.

Selon une caractéristique particulière, un tel procédé de sécurisation est remarquable en ce que ladite étape de vérification comprend :

- une étape de détermination d'une variable égale à $((S'^e + rand - m) \bmod r_1 N) \bmod N$ où $S'$ est un résultat obtenu suite à l'exécution de l'étape de signature d'un message $m$, $N$ est un module public, $rand$ est un nombre aléatoire plus petit que $N$, $r_1$ est un nombre aléatoire, et $e$ est l'exposant public ;

- une étape de comparaison de ladite variable obtenue suite à l'exécution de l'étape de détermination avec le nombre aléatoire *rand* ;
- une étape de détection d'une attaque par injection de faute, qui comprend une étape de transmission d'une information de détection d'une attaque par injection de faute si des nombres comparés lors de l'étape de comparaison sont différents.

Selon une caractéristique particulière, un tel procédé de sécurisation est remarquable en ce que ladite étape de vérification comprend :

- une étape de détermination d'une variable égale à $((S'^{er_2} - m^{r_2})\ mod\ N)$ où $S'$ est un résultat obtenu suite à l'exécution de l'étape de signature d'un message $m$, $N$ est un module public, $r_2$ est un nombre aléatoire, et $e$ est l'exposant public ;
- une étape de comparaison de ladite variable obtenue suite à l'exécution de l'étape de détermination avec zéro ;
- une étape de détection d'une attaque par injection de faute, qui comprend une étape de transmission d'une information de détection d'une attaque par injection de faute si des nombres comparés lors de l'étape de comparaison sont différents.

Selon une caractéristique particulière, un tel procédé de sécurisation est remarquable en ce que ladite étape de vérification comprend :

- une étape de détermination d'une variable égale à $(S'^e\ mod\ r_3 N)\ mod\ r_3$ où S' est un résultat obtenu suite à l'exécution de l'étape de signature d'un message $m$, $N$ est un module public, $r_3$ est un nombre aléatoire, et $e$ est l'exposant public ;
- une étape de comparaison de ladite variable obtenue suite à l'exécution de l'étape de détermination avec $m\ mod\ r_3$;
- une étape de détection d'une attaque par injection de faute, qui comprend une étape de transmission d'une information de détection d'une attaque par injection de faute si des nombres comparés lors de l'étape de comparaison sont différents.

Selon une caractéristique particulière, un tel procédé de sécurisation est remarquable en ce que l'étape de confusion est exécutée avant l'étape de signature, et en ce que l'étape de confusion comprend une étape de détermination d'un message $m$' qui est égal à $(m + r_4 N)\ mod\ r_5 N$ où $m$ est le message à signer, $N$ est un module public, et les nombres $r_4$, $r_5$ sont des nombres aléatoires.

Selon une caractéristique particulière, un tel procédé de sécurisation est remarquable en ce que l'étape de signature comprend une exécution du procédé dit RSA-CRT.

Dans un autre mode de réalisation de l'invention, il est proposé un produit programme d'ordinateur qui comprend des instructions de code de programme pour la mise en oeuvre des procédés précités (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation).

Dans un autre mode de réalisation de l'invention, il est proposé un produit programme d'ordinateur qui comprend des instructions de code de programme pour la mise en oeuvre des procédés précités (dans l'un quelconque de ses différents modes de réalisation), lorsque ledit programme est exécuté sur un ordinateur.

Dans un autre mode de réalisation de l'invention, il est proposé un dispositif électronique comportant des moyens adaptés à la mise en oeuvre des procédés précités (dans l'un quelconque de ses différents modes de réalisation).

Plus précisément, selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un module relais selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), un élément de sécurité (ou « *secure element* » en anglais) utilisé dans le contexte de communication en champ proche (pour « *Near Field Communication* » en anglais), etc.

## 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 présente un organigramme d'un mode implémentation générique du procédé de signature numérique dit RSA-CRT comprenant en outre une étape de vérification en utilisant la clé publique, sécurisé contre des attaques par canaux cachés et par injection de fautes selon l'état de la technique ;
- la figure 2 présente une vulnérabilité intrinsèque aux implémentations telles que décrites en figure 1;
- la figure 3 présente un organigramme d'un mode de réalisation particulier du procédé de test de sécurité selon l'invention ;
- la figure 4(a) représente, schématiquement, un dispositif électronique dans lequel la présente invention est mise en oeuvre ;
- la figure 4(b) représente une carte à microcircuit qui constitue un exemple de dispositif électronique conforme à l'invention tel que représenté à la figure 4(a).

## 6. DESCRIPTION DÉTAILLÉE

Sur toutes les figures du présent document, les éléments et étapes identiques sont désignés par une même référence numérique.

La présente technique est applicable au procédé de traitement cryptographique comprenant une étape de signature selon le procédé cryptographique RSA-CRT et une étape de vérification de la signature obtenue via une utilisation d'un exposant et d'un module qui sont publics. Dans la suite de la description, nous ne détaillerons dans le présent document que ce mode de réalisation.

Cependant, l'Homme du métier pourra adapter aisément la présente technique lorsque des variantes du procédé RSA-CRT telle que décrite dans l'article « On the *Efficiency of Fast RSA Variants in Modern Mobile Phones* » de K. Hansen et al., ou bien dans l'article « *Fast Variants of RSA* » de D. Boneh et al sont mises en oeuvre dans un dispositif électronique (par exemple, lorsque le dispositif électronique met en oeuvre un procédé cryptographique RSA-CRT avec de multiples nombres premiers (i.e avec un nombre de nombres premiers supérieur ou égal à 3), ou lorsque le dispositif électronique met en oeuvre un procédé cryptographique RSA-CRT particulier où le module public est de la forme $N = p^2 q,$ où $p$ et $q$ sont des nombres premiers.

La figure 1 présente un organigramme d'un mode implémentation générique du procédé de signature numérique dit RSA-CRT comprenant en outre une étape de vérification en utilisant la clé publique, sécurisé contre des attaques par canaux cachés et par injection de fautes selon l'état de la technique.

Lorsque le dispositif électronique doit réaliser la signature électronique d'un message $m$, celui met en oeuvre le procédé de signature numérique dit RSA-CRT comprenant en outre une étape de vérification en utilisant la clé publique. Un tel procédé correspond à la succession des étapes 101 à 107.

Dans une étape 101, un message $m_p = m + k_0 p \bmod k_1 p$ est déterminé, où les nombres $k_0$, $k_1$ sont des nombres aléatoires, et le nombre $p$ est un nombre premier (qui est un des paramètres du RSA).

Dans une étape 102, un message $m_q = m + k_2 q \bmod k_3 q$ est déterminé, où les nombres $k_2$, $k_3$ sont des nombres aléatoires, et le nombre $q$ est un nombre premier (qui est un des paramètres du RSA).

Dans une étape 103, le dispositif électronique réalise une exponentiation du message $m_p$ qui est résistante aux attaques SPA et DPA. Ainsi, l'étape 103 vise à déterminer, par exemple, la valeur de $S'_p = m_p{}^{d_p + k_4\,(p-1)} \bmod k_5 p$, où les nombres $k_4$, $k_5$ sont des nombres aléatoires, et le nombre $d_p$ correspond à $d \bmod p-1$ où d est l'exposant privé dans le procédé de signature numérique dit RSA-CRT. Il convient de noter que l'on a $S_p = S'p \bmod p$, où $S_p = m_p{}^{d_p} \bmod p$.

Dans une étape 104, le dispositif électronique réalise une exponentiation du message $m_q$ qui est résistante aux attaques SPA et DPA. Ainsi, l'étape 104 vise à déterminer, par exemple, la valeur de $S'_q = m_q{}^{d_p + k_6\,(q-1)} \bmod k_7 q$, où les nombres $k_6$, $k_7$ sont des nombres aléatoires, et le nombre $d_q$ correspond à $d \bmod q-1$. Il convient de noter que l'on a $S_q = S'_q \bmod q$, où $Sq = m_q{}^{d_q} \bmod q$.

Les nombres $k_i$ précédemment utilisés peuvent être des nombres aléatoires de 32 bits, ou 64 bits qui sont générés par le dispositif électronique à chaque fois que le procédé de signature numérique est exécuté.

Dans une étape 105, on recombine (selon l'algorithme de Garner ou l'algorithme de Gauss) de par le théorème des restes chinois les valeurs obtenues en sorties des étapes 104 et 103, puis, dans une étape 106, on réduit le résultat obtenu en sortie de l'étape 105, $S'_q + q.(i_q.(S'_p - S'_q) \bmod k_5 p)$, via une opération de réduction modulaire, en utilisant le module $N = p.q$. Ainsi, on obtient une signature $S$ du message $m$, qu'il convient de vérifier pour détecter une éventuelle attaque par injection de faute(s).

Dans une étape 107, on réalise une exponentiation en utilisant l'exposant public $e$, afin de déterminer $S^e \bmod N$, qui doit être égal au message m si aucune attaque par injection de faute(s) n'a été réalisée.

Le procédé tel que décrit en relation avec la figure 1 est, au vu de l'état de la technique résistant aux attaques par canaux auxiliaires, ainsi qu'aux attaques par injection de faute(s).

La figure 2 présente une vulnérabilité intrinsèque aux implémentations telles que décrites en figure 1.

En effet, un attaquant, en introduisant avant la réalisation de l'étape 101 via l'étape d'injection d'erreur 201, ou avant la réalisation de l'étape 102 via l'étape d'injection d'erreur 202, une erreur $\varepsilon$ dans le message $m$ visant à perturber les étapes 101, 103 et suivantes, ou à perturber les étapes 102, 104 et suivantes, peut réaliser une attaque par canaux auxiliaire lors de l'exécution de l'étape 107.

En effet, une telle attaque peut être mise en oeuvre car lorsqu'une telle erreur est par exemple introduite via l'étape d'injection d'erreur 201, on obtient une signature erronée $\tilde{S}_1$ en sortie de l'étape 106, qui vérifie l'équation suivante :

$$\tilde{S}_1^{\,e} = m + \varepsilon . q . i_q \ mod \ N \ \text{où} \ i_q = \ q^{-1} \ mod \ p \, .$$

En effet, en constatant, d'après la recombinaison de Gauss, que $\tilde{S}_1^e - S^e = (pi_p S_q)^e + (qi_q \tilde{S}_p)^e - (pi_p S_q)^e + (qi_q S_p)^e \bmod N = (qi_q)^e (\tilde{S}_p{}^e - S_p{}^e) \bmod N$, , avec $\tilde{S}_p$ correspondant à une valeur erronée de $S_p$, et que $(\tilde{S}_p{}^e - S_p{}^e) = \varepsilon \bmod p$, et $(\tilde{S}_p{}^e - S_p{}^e) = 0 \bmod q$, on a : $\tilde{S}_1^e - S^e = (pi_p) .0 + (qi_q). \varepsilon \bmod N$.

De même, lorsqu'une erreur est par exemple introduite via l'étape d'injection d'erreur 202, on obtient une signature erronée $\tilde{S}_2$ en sortie de l'étape 106, qui vérifie l'équation suivante : $\tilde{S}_2^e = m + \varepsilon . p . i_p \bmod N$ où $i_p = p^{-1} \bmod q$.

Ainsi, un attaquant peut réaliser une attaque par canaux cachés afin d'obtenir la valeur de $(\varepsilon.p.i_p) \bmod N$ (ou $(\varepsilon. p. i_p) \bmod N - N$) ou de $(\varepsilon. q. i_q) \bmod N$ (ou $(\varepsilon.q.i_q) \bmod N - N$) à partir de mesures physiques obtenues au cours d'une étape 203. Une fois une telle valeur obtenue, on retrouve le nombre premier $p$ ou $q$ en déterminant le plus grand commun diviseur entre la valeur ainsi obtenue et $N$.

La formulation de ce problème de sécurité est en soit nouveau et inventif.

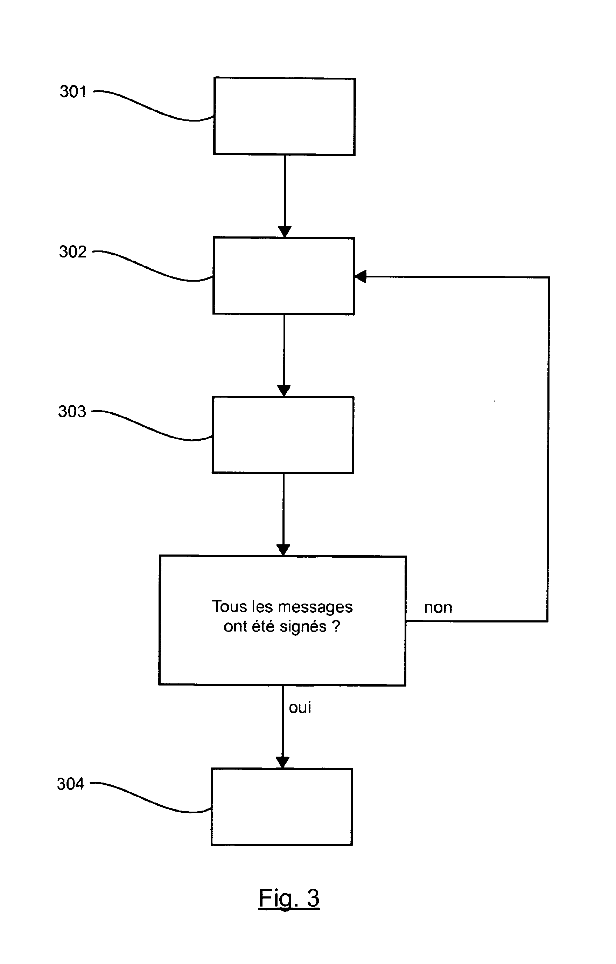

La figure 3 présente un organigramme d'un mode de réalisation particulier du procédé de test de sécurité selon l'invention.

Dans ce mode de réalisation, nous supposerons qu'une injection de faute(s) est toujours réalisée selon l'étape 201. Ainsi, seule la détermination de $S'_p$ est altérée via une modification du message. L'Homme du métier pourra adapter ce mode de réalisation au cas où une injection de faute(s) est toujours réalisée uniquement selon l'étape 202.

Le procédé de test de sécurité d'un dispositif électronique vis-à-vis d'une combinaison d'une attaque par canaux auxiliaires et d'une attaque par injection de fautes comprend :

- une étape de génération 301 d'une pluralité de message $m_i$ avec $i$ un entier compris entre 1 et $N_1$, où $N_1$ est un grand nombre (la valeur de $N_1$ pouvant varier entre 10000 et plusieurs centaines de milliers);
- une étape de signature 302 qui consiste, pour chaque message $m_i$, à réaliser une signature par le dispositif électronique, en injectant dans le message à signer une même erreur ε lors d'une étape 201 ;

- une étape de collecte d'information 303, durant la réalisation d'une étape de vérification de la signature 107 (qui est donc toujours erronée), qui consiste à capter via des capteurs de mesures des paramètres physiques émis par le dispositif électronique (courbes de consommation, etc...) ;
- une étape d'analyse 304 des mesures des paramètres physiques réalisée une fois que l'on a signé la totalité des messages $m_i$, qui comprend une étape de détermination d'un coefficient de corrélation en réalisant une supposition sur la valeur de ε. q. $i_q$ mod N, ou de (ε. q. $i_q$)mod N - N.

De par la taille de ε.q.$i_q$ mod N, il est nécessaire de réaliser une supposition pour un octet de la valeur de ε.q.$i_q$ mod N, et de réitérer l'étape de détermination d'un coefficient de corrélation sur un autre *octet.* Cette remarque est aussi valable pour la taille de (ε. q. $i_q$)mod N - N.

Dans une variante, l'étape d'analyse 304 peut être exécutée de manière concomitante avec les étapes 302 et 303, lorsque l'on a collecté un certain nombre de signatures.

Dans une variante, l'étape d'analyse comprend en outre une étape de résolution d'une équation polynômiale comprenant une étape d'utilisation de l'algorithme dit LLL.

Plus précisément, lorsqu'on obtient *t* bits de poids faible du nombre ε. q. $i_q$ mod N, il est possible d'établir la relation suivante :

ε.q.$i_q$ = $2^t_x$ + k mod N, où les valeurs de t et de k sont connues, et où la valeur de x, d'une taille de *ceil(log$_2$(N) - t)* avec la fonction ceil correspondant à la partie entière par excès, est inconnue. Pour déterminer la valeur de *x*, il suffit de résoudre l'équation polynomiale suivante :

$$P(\varepsilon, x) = x^2 + c(2^{t+1}k - 2^t\varepsilon)x + ck(k - \varepsilon) = 0 \bmod N, \text{ où } c = 2^{-2t} \bmod N.$$

En effet, par application du théorème de Bezout, on a $pi_p$ + $qi_q$ = 1 mod N. Par conséquent, on a ε. $pi_p$ = ε - $2^t$x - k mod N.

Puis, en multipliant ε. $pi_p$ par ε. q.$i_q$ et en utilisant les relations précédentes, on a ε.$pi_p$. ε.q.$i_q$= ($2^t$x + k ).(ε - $2^t$x - k) = 0 mod N.

Lorsque la valeur de l'erreur ε est connue, et lorsque $t > \frac{1}{2} log_2(N),$ les conditions nécessaires (décrites dans l'article « *Finding a small root of bivariate integer équation* » de D. Coppersmith) pour résoudre cette équation polynomiale via l'utilisation de l'algorithme LLL sont remplies.

Lorsque la valeur de l'erreur ε est inconnue, et lorsque $t > \frac{1}{2} log_2(N),$ les conditions nécessaires (décrites dans l'article « *Finding a small root of bivariate integer équation* » de D. Coppersmith) pour résoudre cette équation polynomiale via l'utilisation de l'algorithme LLL sont remplies.

Un tel procédé de test de sécurité peut être mis en oeuvre par exemple par un système comprenant un instrument de mesures (comme par exemple, un oscilloscope) afin de capter des mesures physiques de paramètres liés à un état interne du dispositif électronique dont on souhaite évaluer la sécurité, et un ordinateur capable de réaliser les opérations d'analyse et de coordination au sein du système.

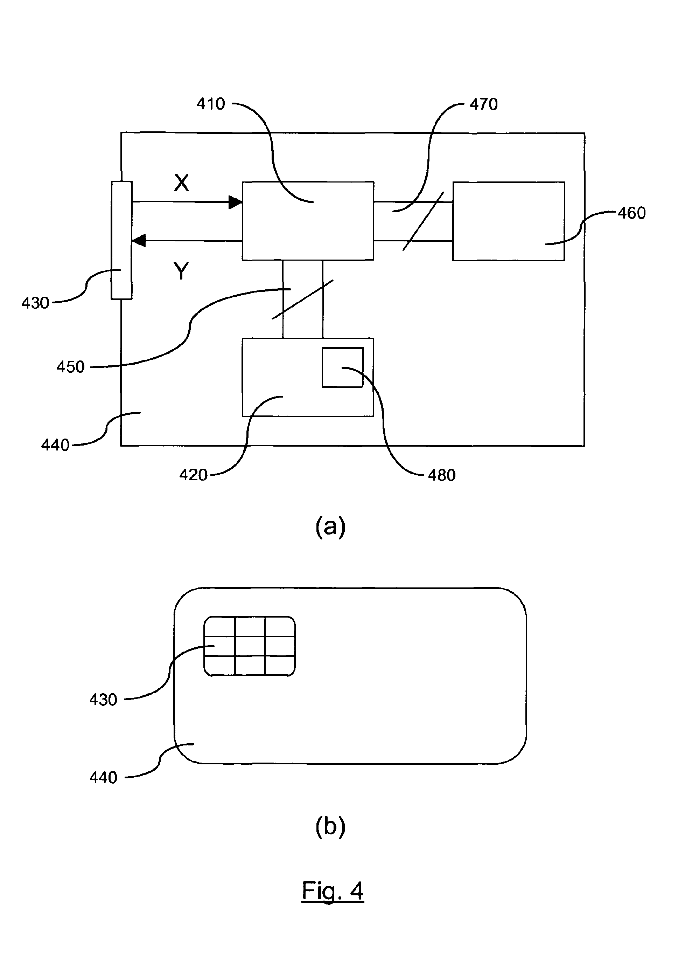

La figure 4(a) représente, schématiquement, un dispositif électronique 440 dans lequel la présente invention est mise en oeuvre.

Ce dispositif 440 comprend un microprocesseur 410, auquel est associé d'une part une mémoire vive 460, par exemple au moyen d'un bus 470, et d'autre part une mémoire non volatile 420 (par exemple du type EEPROM), par exemple à travers un bus 450.

Le dispositif de traitement de données 440, et précisément le microprocesseur 410 qu'il incorpore, peuvent échanger des données avec des dispositifs extérieurs au moyen d'une interface de communication 430.

On a schématiquement représenté sur la figure 4(a) la transmission d'une donnée d'entrée X reçue d'un dispositif extérieur (non représenté) et transmise de l'interface de communication 430 au microprocesseur 410. De manière similaire, on a représenté la transmission d'une donnée de sortie Y du microprocesseur 410 vers l'interface de communication 430 à destination d'un dispositif extérieur. Cette donnée de sortie Y est issue d'un traitement de données par le microprocesseur 410, généralement sur la donnée d'entrée X à l'aide d'une donnée secrète 480 interne au système, par exemple une clé privée, ou un nombre aléatoire.

Les données d'entrée X sont par exemple des commandes APDU, et les données de sortie des réponses APDU.

Bien que, pour l'illustration, les données d'entrée et les données de sortie figurent sur deux flèches différentes, les moyens physiques qui permettent la communication entre le microprocesseur 410 et l'interface 430 pourront être réalisés par des moyens uniques, par exemple un port de communication série ou un bus.

Le microprocesseur 410 est apte à exécuter un logiciel (ou programme d'ordinateur) qui permet au dispositif électronique 440 d'exécuter un procédé apte à mettre en défaut une attaque telle que décrite dans ce document. Un tel procédé est par exemple exécuté par le microprocesseur 440 sur réception des données d'entrée X. Les données du procédé selon l'invention peuvent être obtenues à partir des données d'entrée ou, à partir de la mémoire non volatile 420. Les données de sorties sont par exemple obtenues à partir du résultat du procédé selon l'invention. Une telle donnée de sortie peut être soit une information relative à la détection d'une attaque par injection de faute(s). Le logiciel est composé d'une série d'instructions de commande du microprocesseur 410 qui sont par exemple stockées dans la mémoire 420.

Dans une variante, l'ensemble microprocesseur 410 - mémoire non-volatile 420 - mémoire vive 460 peut être remplacé par un circuit à application spécifique qui comprend alors des moyens de mise en oeuvre des différentes étapes du procédé de traitement de données. Plus généralement, le dispositif de traitement est un circuit intégré.

La figure 4(b) représente une carte à microcircuit qui constitue un exemple de dispositif électronique conforme à l'invention tel que représenté à la figure 4(a). L'interface de communication 430 est dans ce cas réalisée au moyen des contacts de la carte à microcircuit ou bien d'une antenne logée dans le corps de carte. La carte à microcircuit incorpore un microprocesseur 410, une mémoire vive 460 et une mémoire non volatile 420 comme cela est représenté sur la figure 4(a).

Cette carte à microcircuit est par exemple conforme à la norme ISO 7816 et munie d'un microcontrôleur sécurisé qui regroupe le microprocesseur (ou CPU) 420 et la mémoire vive 460.

Les données d'entrée X sont par exemple des commandes APDU, et les données de sortie des réponses APDU.

Dans une variante, le dispositif de traitement de données peut être une clef USB, un document ou un support d'informations papier comportant dans l'une de ses feuilles un microcircuit associé à des moyens de communication sans contact. Il s'agit de manière préférée d'une entité électronique portable ou de poche.

Le dispositif est par exemple sécurisé. Par exemple, le dispositif comporte des moyens aptes à le protéger contre des attaques visant à obtenir frauduleusement les données secrètes qu'il mémorise (par exemple, une clé cryptographique) telle que les attaques par fautes et/ou par analyse de canaux auxiliaires (en anglais , « *side channel attacks* »). En particulier, le dispositif est conforme à la norme FIPS ou aux critères communs.

**Revendications**

1. Procédé de test de sécurité d'un dispositif électronique vis-à-vis d'une combinaison d'une attaque par canaux auxiliaires et d'une attaque par injection de fautes qui est mise en oeuvre lors d'une exécution d'un procédé de traitement cryptographique comprenant une étape de signature d'un message à partir d'au moins un paramètre secret, ladite étape de signature mettant en oeuvre une recombinaison d'au moins deux valeurs intermédiaires selon le théorème des restes chinois, et une étape de vérification de ladite signature à partir d'au moins un exposant public, le procédé de test étant **caractérisé en ce qu'il** comprend :

   - une étape de transmission d'une pluralité de messages à signer par ledit dispositif électronique ;
   - une étape de perturbation de chaque message, comprenant une modification dudit message par une introduction d'une erreur identique pour chaque message, avant l'exécution d'une étape de détermination d'une des valeurs intermédiaires ;
   - une étape d'analyse de mesures physiques obtenues pendant ladite étape de vérification de ladite signature en fonction dudit message à signer, de ladite erreur identique pour chaque message et d'une supposition d'une valeur d'une partie dudit au moins un paramètre secret.

2. Procédé de test de sécurité selon la revendication 1, **caractérisé en ce que** ladite étape de signature correspond à une étape d'exécution du procédé de traitement cryptographique RSA-CRT.

3. Procédé de test de sécurité selon la revendication 1, **caractérisé en ce que** ladite étape de signature correspond à une étape d'exécution de variantes du procédé de traitement cryptographique RSA-CRT.

4. Procédé de test de sécurité selon la revendication 2, **caractérisé en ce que** ladite étape d'analyse de mesures physiques comprend une étape de détermination d'un coefficient de corrélation entre lesdites mesures physiques obtenues et une estimation d'une variable $m + \tilde{u} \bmod N$, où $\tilde{u}$ est ladite supposition d'une valeur d'une partie dudit au moins un paramètre secret, ledit coefficient étant maximal lorsque $\tilde{u} = f(\varepsilon, p, i_p, N)$ ou lorsque $\tilde{u} = f(\varepsilon, q, i_q, N)$, selon la valeur intermédiaire perturbée par l'exécution de ladite étape de perturbation, où $m$ correspond audit message, $\varepsilon$ correspond à une représentation de ladite erreur introduite lors de l'exécution de ladite étape de perturbation, $p$ et $q$ correspondent à des nombres premiers qui sont des paramètres du procédé de traitement cryptographique RSA-*CRT, N* correspond au produit des nombres premiers $p$ et $q$, $t_p = p^{-1} \bmod q$ et $i_q = q^{-1} \bmod p$, l'opération *mod* correspond à une opération de réduction modulaire, et la fonction *f* est définie par l'une des deux équations suivantes: *f(a,b,c,d) = a.b.c mod d* et *f(a,b,c,d) =( a.b.c mod d) -d* .

5. Procédé de test de sécurité selon la revendication 4, **caractérisé en ce que** ladite supposition d'une valeur d'une partie dudit au moins un paramètre secret est réalisée octet par octet.

6. Procédé de test de sécurité selon l'une quelconque des revendications 4 et 5, **caractérisé en ce que** lorsqu'on obtient $t$ bits de poids faible du nombre $f (\varepsilon, p, i_p, N)$ ou du nombre $f(\varepsilon, q, i_q, N)$, les autres bits sont obtenus via une étape de résolution d'une équation polynômiale $P(\varepsilon,x) = x^2 + c(2^{t+1}k - 2^t\varepsilon)x + ck(k - \varepsilon) = 0 \bmod N$, où $c = 2^{-2t} \bmod N$, et où $k$ vérifie $f(a,b, c, N) = 2^t x + k \bmod N$.

7. Procédé de test de sécurité selon la revendication 6, **caractérisé en ce que**, lorsque ladite erreur $\varepsilon$ est connue et lorsque $t > \frac{1}{2} log_2(N)$, ladite équation polynômiale est résolue via une utilisation de l'algorithme LLL.

8. Procédé de test de sécurité selon la revendication 6, **caractérisé en ce que**, lorsque ladite erreur $\varepsilon$ est inconnue, et lorsque $t > \frac{1}{2} log_2(N) + s$ où $s$ est une taille en bits d'une représentation de ladite erreur $\varepsilon$, ladite équation polynômiale est résolue via une utilisation de l'algorithme LLL.

9. Dispositif électronique comprenant des moyens de traitement cryptographique comprenant des moyens permettant de réaliser une signature d'un message à partir d'au moins un paramètre secret, lesdits moyens permettant de réaliser une signature comprennent en outre des moyens de recombinaison d'au moins deux valeurs intermédiaires selon le théorème des restes chinois, et des moyens de vérification de ladite signature à partir d'au moins un exposant public, le dispositif électronique étant **caractérisé en ce qu'il** comprend des moyens de confusion mis en oeuvre durant une utilisation des moyens de traitement cryptographique, lesdits moyens de confusion permettant d'empêcher l'établissement d'une relation entre un résultat obtenu suite à l'utilisation des moyens de vérification, ledit message, une erreur introduite dans ledit message lorsque celui-ci est utilisé pour établir une desdites deux valeurs intermédiaires, et une partie d'au moins un paramètre secret, ladite relation permettant de réaliser une attaque par analyse de mesures de paramètres physiques émis par ledit dispositif électronique.

10. Dispositif électronique selon la revendication 9, **caractérisé en ce que** lesdits moyens de vérification comprennent lesdits moyens de confusion.

11. Dispositif électronique selon la revendication 10, **caractérisé en ce que** lesdits moyens de vérification comprennent :

 - des moyens de détermination d'une variable égale à $((S'^e + rand - m) \bmod r_1 N) \bmod N$ où $S'$ est un résultat obtenu suite à l'utilisation des moyens permettant de réaliser une signature d'un message $m$, $N$ est un module public, *rand* est un nombre aléatoire plus petit que $N$ , $r_1$ est un nombre aléatoire et $e$ est l'exposant public;
 - des moyens de comparaison de ladite variable obtenue par l'utilisation des moyens de détermination avec le nombre aléatoire *rand* ;
 - des moyens de détection d'une attaque par injection de faute, qui transmettent une information de détection d'une attaque par injection de faute si des nombres comparés par lesdits moyens de comparaison sont différents.

12. Dispositif électronique selon la revendication 10, **caractérisé en ce que** lesdits moyens de vérification comprennent :

 - des moyens de détermination d'une variable égale à $((S'^{er_2} - m^{r_2} ) \bmod N)$ où $S'$ est un résultat obtenu suite à l'utilisation des moyens permettant de réaliser une signature d'un message $m$, $N$ est un module public, $r_2$ est un nombre aléatoire et $e$ est l'exposant public;
 - des moyens de comparaison de ladite variable obtenue par l'utilisation des moyens de détermination avec zéro ;
 - des moyens de détection d'une attaque par injection de faute, qui transmettent une information de détection d'une attaque par injection de faute si des nombres comparés par lesdits moyens de comparaison sont différents.

13. Dispositif électronique selon la revendication 10, **caractérisé en ce que** lesdits moyens de vérification comprennent :

- des moyens de détermination d'une variable égale à $(S'^e \bmod r_3 N) \bmod r_3$ où S' est un résultat obtenu suite à l'utilisation des moyens permettant de réaliser une signature d'un message $m$, $N$ est un module public, $r_3$ est un nombre aléatoire et $e$ est l'exposant public;
- des moyens de comparaison de ladite variable obtenue par l'utilisation des moyens de détermination avec $m \bmod r_3$;
- des moyens de détection d'une attaque par injection de faute, qui transmettent une information de détection d'une attaque par injection de faute si des nombres comparés par lesdits moyens de comparaison sont différents.

14. Dispositif *électronique* selon la revendication 9, **caractérisé en ce que** lesdits moyens de confusion sont utilisés avant les moyens permettant de réaliser une signature d'un message, et **en ce** qu'ils comprennent des moyens de détermination d'un message $m'$ qui est égal à $(m + r_4 N) \bmod r_5 N$ où $m$ est le message à signer, $N$ est un module public, et les nombres $r_4$, $r_5$ sont des nombres aléatoires.

15. Dispositif électronique selon l'une quelconque des revendications 9 à 14, **caractérisé en ce que** les moyens permettant de réaliser une signature d'un message sont capable de réaliser une signature selon le procédé dit RSA-CRT.

**Patentansprüche**

1. Testverfahren für eine elektronische Vorrichtung zur Prüfung der Sicherheit gegenüber einer Kombination aus einem Angriff über Hilfskanäle und aus einem Angriff durch Fehlerinjektion, die bei der Ausführung eines Verschlüsselungsverfahrens angewendet wird, das ausgehend von mindestens einem geheimen Parameter einen Schritt der Signatur einer Meldung umfasst, wobei es bei diesem Schritt der Signatur zu einer Rekombination von mindestens zwei Zwischenwerten nach dem Theorem der chinesischen Restsätze kommt, sowie ausgehend von mindestens einem bekannten Exponenten einen Schritt des Überprüfens dieser Signatur, wobei das Testverfahren **dadurch gekennzeichnet** ist, dass es umfasst:

   - einen Übertragungsschritt einer Vielzahl von Meldungen, die von dieser elektronischen Vorrichtung zu signieren sind;
   - einen Störschritt für jede Meldung, der durch Einführen eines für jede Meldung identischen Fehlers ein Modifizieren der Meldung umfasst, bevor einer der Zwischenwerte bestimmt wird;
   - einen Analyseschritt, entsprechend der zu signierenden Meldung, des identischen Fehlers für jede Meldung und einer Vermutung eines Werts eines Teils des mindestens einen geheimen Parameters, von physikalischen Größen, die während des Prüfschritts der Signatur erhalten werden.

2. Sicherheitstestverfahren nach Anspruch 1, **dadurch gekennzeichnet, dass** dieser Signaturschritt einem Ausführschritt des RSA-CRT-Verschlüsselungsverfahrens entspricht.

3. Sicherheitstestverfahren nach Anspruch 1, **dadurch gekennzeichnet, dass** dieser Signaturschritt einem Ausführschritt von Varianten des RSA-CRT-Verschlüsselungsverfahrens entspricht.

4. Sicherheitstestverfahren nach Anspruch 2, **dadurch gekennzeichnet, dass** der Analyseschritt von physikalischen Größen einen Bestimmungsschritt eines Korrelationskoeffizienten zwischen den erhaltenen physikalischen Größen und einer Schätzung einer Variablen $m + \tilde{u} \bmod N$ umfasst, wobei $\tilde{u}$ die Vermutung eines Werts eines Teils des mindestens einen geheimen Parameters ist, wobei dieser Koeffizient am größten ist, wenn $\tilde{u} = f(\varepsilon, p, i_p, N)$, oder wenn $\tilde{u} = f(\varepsilon, q, i_q, N)$, gemäß dem durch die Ausführung des Störschritts gestörten Zwischenwert, wobei $m$ dieser Meldung entspricht, $\varepsilon$ einer Repräsentation des bei Ausführen des Störschritts eingeführten Fehlers entspricht, $p$ und $q$ Primzahlen entsprechen, welche Parameter des RSA-CRT-Verschlüsselungsverfahrens sind, $N$ dem Produkt der Primzahlen $p$ und $q$ entspricht, $i_p = p^{-1} \bmod q$ und $i_q = q^{-1} \bmod p$, wobei die *mod*-Operation einer modularen Reduktionsoperation entspricht, und die Funktion $f$ durch eine der zwei folgenden Gleichungen definiert ist: $f(a, b, c, d) = a.b.c \bmod d$ und $f(a, b, c, d) = (a. b. c \bmod d) - d$.

5. Sicherheitstestverfahren nach Anspruch 4, **dadurch gekennzeichnet, dass** diese Vermutung eines Werts eines Teils des mindestens einen geheimen Parameters Byte für Byte angestellt wird.

6. Sicherheitstestverfahren nach einem der Ansprüche 4 und 5, **dadurch gekennzeichnet, dass** wenn man $t$ leichte Bits der Zahl $f(\varepsilon, p, i_p, N)$ bzw. der Zahl $f(\varepsilon, q, i_q, N)$ erhält, die anderen Bits über die Lösung einer Polynomgleichung $P(\varepsilon, x) = x^2 + c(2^{t+1} k - 2^t \varepsilon)x + ck(k - \varepsilon) = 0 \bmod N$ erhält, wobei $c = 2^{-2t} \bmod N$, und *wobei k überprüft, ob f(a,b,c,N)*

$= 2^t x + k \bmod N.$

7. Sicherheitstestverfahren nach Anspruch 6, **dadurch gekennzeichnet, dass** wenn der Fehler ε bekannt ist und wenn $t > \frac{1}{2}\log_2(N)$, diese Polynomgleichung durch eine Anwendung des Algorithmus LLL gelöst wird.

8. Sicherheitstestverfahren nach Anspruch 6, **dadurch gekennzeichnet, dass** wenn der Fehler ε bekannt ist und wenn $t > \frac{1}{2}\log_2(N) + s$, wobei s eine Bitgröße einer Repräsentation dieses Fehlers ε ist, diese Polynomgleichung durch eine Anwendung des Algorithmus LLL gelöst wird.

9. Elektronische Vorrichtung mit kryptographischen Bearbeitungsmitteln, die Mittel umfassen, um ausgehend von mindestens einem geheimen Parameter eine Signatur einer Meldung zu erstellen, wobei diese Mittel für die Signatur zudem Mittel zum Rekombinieren von mindestens zwei Zwischenwerten nach dem Theorem der chinesischen Restsätze umfassen, sowie Mittel zum Überprüfen dieser Signatur ausgehend von mindestens einem bekannten Exponenten, wobei die elektronische Vorrichtung **dadurch gekennzeichnet** ist, dass sie Konfusionsmittel umfasst, die bei der Anwendung der kryptographischen Bearbeitungsmittel zum Einsatz kommen, wobei diese Konfusionsmittel verhindern, dass eine Verbindung hergestellt werden kann zwischen einem nach Anwendung der Mittel zum Überprüfen erzielten Ergebnis, der Meldung, einem in diese Meldung eingeführten Fehler, wenn diese Meldung dazu verwendet wird, einen der zwei Zwischenwerte zu ermitteln, sowie einem Teil von mindestens einem geheimen Parameter, wobei diese Verbindung ermöglicht, durch die Analyse von physikalischen Parametergrößen, die von der elektronischen Vorrichtung abgegeben werden, einen Angriff durchzuführen.

10. Elektronische Vorrichtung nach Anspruch 9, **dadurch gekennzeichnet, dass** die Mittel zum Überprüfen die besagten Konfusionsmittel umfassen.

11. Elektronische Vorrichtung nach Anspruch 10, **dadurch gekennzeichnet, dass** die Mittel zum Überprüfen folgendes umfassen:

    - Mittel zum Bestimmen einer Variablen, die gleich $((S^{\prime e} + rand - m)\bmod r_1 N)\bmod N$ ist, wobei S' ein nach der Anwendung der Mittel zum Erstellen einer Signatur einer Meldung m erzieltes Ergebnis ist, N ein bekanntes Modul ist, rand eine Zufallszahl kleiner als N ist, $r_1$ eine Zufallszahl und e der bekannte Exponent ist;
    - Mittel zum Vergleichen dieser durch die Anwendung der Mittel zum Bestimmen erzielten Variablen mit der Zufallszahl rand;
    - Mittel zur Detektion eines Angriffs durch Fehlerinjektion, die eine Information über die Detektion eines Angriffs durch Fehlerinjektion übertragen, wenn von den Mitteln zum Vergleichen verglichene Zahlen unterschiedlich sind.

12. Elektronische Vorrichtung nach Anspruch 10, **dadurch gekennzeichnet, dass** die Mittel zum Überprüfen folgendes umfassen:

    - Mittel zum Bestimmen einer Variablen, die gleich $((S^{\prime e r_2} - m^{r_2})\bmod N)$ ist, wobei S' ein nach der Anwendung der Mittel zum Erstellen einer Signatur einer Meldung m erzieltes Ergebnis ist, N ein bekanntes Modul ist, $r_2$ eine Zufallszahl und e der bekannte Exponent ist;
    - Mittel zum Vergleichen dieser durch die Anwendung der Mittel zum Bestimmen erzielten Variablen mit null;
    - Mittel zur Detektion eines Angriffs durch Fehlerinjektion, die eine Information über die Detektion eines Angriffs durch Fehlerinjektion übertragen, wenn von den Mitteln zum Vergleichen verglichene Zahlen unterschiedlich sind.

13. Elektronische Vorrichtung nach Anspruch 10, **dadurch gekennzeichnet, dass** die Mittel zum Überprüfen folgendes umfassen:

    - Mittel zum Bestimmen einer Variablen, die gleich $(S^{\prime e} \bmod r_3 N)\bmod r_3$ ist, wobei S' ein nach der Anwendung der Mittel zum Erstellen einer Signatur einer Meldung m erzieltes Ergebnis ist, N ein bekanntes Modul ist, $r_3$ eine Zufallszahl und e der bekannte Exponent ist;
    - Mittel zum Vergleichen dieser durch die Anwendung der Mittel zum Bestimmen erzielten Variablen mit $m \bmod r_3$;
    - Mittel zur Detektion eines Angriffs durch Fehlerinjektion, die eine Information über die Detektion eines Angriffs durch Fehlerinjektion übertragen, wenn von den Mitteln zum Vergleichen verglichene Zahlen unterschiedlich sind.

**14.** Elektronische Vorrichtung nach Anspruch 9, **dadurch gekennzeichnet, dass** diese Konfusionsmittel vor den Mitteln zum Erstellen einer Signatur einer Meldung zum Einsatz kommen, und dadurch, dass sie Mittel zum Bestimmen einer Meldung *m'* umfassen, die gleich (*m* + $r_4N$) *mod $r_5N$* ist, wobei *m* die zu signierende Meldung und *N* ein bekanntes Modul ist, und die Zahlen $r_4$ und $r_5$ Zufallszahlen sind.

**15.** Elektronische Vorrichtung nach einem der Ansprüche 9 bis 14, **dadurch gekennzeichnet, dass** die Mittel zum Erstellen einer Signatur einer Meldung eine Signatur gemäß dem sogenannten RSA-CRT-Verfahren erstellen können.

**Claims**

**1.** Method for security testing an electronic device against a combination of a side-channel attack and a fault-injection attack implemented during an execution of a method of cryptographic processing that includes a step of delivering a signature of a message on the basis of at least one secret parameter, said step of delivering a signature implementing a recombination of at least two intermediate values according to the Chinese remainder theorem, and a step of verifying said signature on the basis of at least one public exponent, the method for testing being **characterised in that** it comprises:

- a step of transmitting a plurality of messages to be signed by said electronic device;
- a step of disturbing each message, comprising a modification of said message by introducing an identical error for each message, before executing a step of determining one of the intermediate values;
- a step of analysing physical measurements obtained during said step of verifying said signature as a function of said message to be signed, said error which is identical for each message, and an assumption of a value of a part of said at least one secret parameter.

**2.** Method for security testing according to claim 1, **characterised in that** said step of delivering a signature corresponds to a step of executing an RSA-CRT method of cryptographic processing.

**3.** Method for security testing according to claim 1, wherein said step of delivering a signature corresponds to a step of executing variants of an RSA-CRT method of cryptographic processing.

**4.** Method for security testing according to claim 2, **characterised in that** said step of analysing physical measurements comprises a step of determining a coefficient of correlation between said physical measurements obtained and an estimation of a variable m + $\tilde{u}$ mod N, where $\tilde{u}$ is said assumption of a value of a part of said at least one secret parameter, said coefficient being maximal when $\tilde{u}$ = *f (ε, p, $i_p$, N)* or when $\tilde{u}$ = *f(ε, q, $i_q$, N),* depending on the intermediate value disturbed by the execution of said step of disturbing, where m corresponds to said message, ε corresponds to a representation of said error introduced during the execution of said step of disturbing, p and q correspond to prime numbers which are parameters of the RSA-CRT method of cryptographic processing, N corresponds to the product of the prime numbers p and q, $i_p$ = p$^{-1}$ *mod* q and $i_q$ = q$^{-1}$ *mod* p, the operation *mod* corresponds to an operation of modular reduction, and the function *f* is defined by one of the two following equations: *f(a,b,c,d) = a.b.c mod d* and *f(a,b,c,d) = (a. b. c mod d) -d.*

**5.** Method for security testing according to claim 4, **characterised in that** said assumption of a value of a part of said at least one secret parameter is made byte by byte.

**6.** Method for security testing according to any of claims 4 and 5, **characterised in that** when *t less* significant bits of the number *f(ε, p, $i_p$, N)* or the number *f(ε, q, $i_q$, N)* are obtained, the other bits are obtained via a step of resolving a polynomial equation *P(ε, x) = x$^2$ + c(2$^{t+1}$k - 2$^t$ε)x + ck(k - ε) = 0 mod N,* where c = 2$^{-2t}$ *mod N,* and where *k* verifies *f(a,b,c,N) = 2$^t$x + k mod N.*

**7.** Method for security testing according to claim 6, **characterised in that**, when said error ε is known and when

$$t > \frac{1}{2}log_2\ (N),$$ said polynomial equation is resolved through a use of an LLL algorithm.

**8.** Method for security testing according to claim 6, **characterised in that**, when said error ε is unknown and when $t > \frac{1}{2} \, log_2(N) + s$ where s is a size in bits of a representation of said error $\varepsilon$, said polynomial equation is resolved through a use of an LLL algorithm.

9. Electronic device comprising means for cryptographic processing comprising means for delivery of a signature of a message on the basis of at least one secret parameter, said means for delivering a signature further comprising means for recombining at least two intermediate values according to the Chinese remainder theorem, and means for verifying said signature from at least one public exponent; the electronic device being **characterised in that** it comprises means for confusion implemented during a use of the means for cryptographic processing, said means for confusion preventing establishment of a relationship between a result obtained following a use of the means for verifying, said message, an error introduced into said message when the latter is used to establish one of said two intermediate values, and a part of at least one secret parameter, said relationship enabling an attack to be made by analysis of measurements of physical parameters transmitted by said electronic device.

10. Electronic device according to claim 9, **characterized in that** said means for verifying comprise said means for confusion.

11. Electronic device according to claim 10, **characterised in that** said means for verifying comprise:

  - means for determining a variable equal to $((S^e + rand - m) \bmod r_1N) \bmod N$ where S' is a result obtained following the use of the means for delivering a signature of a message $m$, $N$ is a public modulus, $rand$ is a random number smaller than $N$, $r_1$ is a random number and e is the public exponent;
  - means for comparing said variable obtained by the use of the means for determining with the random number $rand$;
  - means for detecting a fault-injection attack that transmit a piece of information on detection of a fault-injection attack if numbers compared by said means for comparing are different.

12. Electronic device according to claim 10, **characterised in** said means for verifying comprise:

  - means for determining a variable equal to $((S'^{er_2} - m^{r_2}) \bmod N)$ where S' is a result obtained following a use of the means for delivering a signature of a message $m$, $N$ is a public modulus, $r_2$ is a random number and e is the public exponent;
  - means for comparing said variable obtained by the use of the means for determining with zero;
  - means for detecting a fault-injection attack that transmit a piece of information on detection of a fault-injection attack if numbers compared by said means for comparing are different.

13. Electronic device according to claim 10, **characterized in that** said means for verifying comprise:

  - means for determining a variable equal to $(S'^e \bmod r_3N) \bmod r_3$ where S' is a result obtained following a use of the means for delivering a signature of a message $m$, $N$ is a public modulus, $r_3$ is a random number and e is the public exponent;
  - means for comparing said variable obtained by the use of the means for determining with $m \bmod r_3$ ;
  - means for detecting a fault-injection attack that transmit a piece of information on detection of a fault-injection attack if numbers compared by said means for comparing are different.

14. Electronic device according to claim 9, **characterised in that** said means for confusion are used before the means for delivering a signature of a message, and **in that** they comprise means for determining a message $m'$ that is equal to $(m + r_4N) \bmod r_5N$ where $m$ is the message to be signed, $N$ is a public modulus and the numbers $r_4$, $r_5$ are random numbers.

15. Electronic device according to any of claims 9 to 14, **characterised in that** the means for delivering a signature of a message are capable of delivering a signature according to an RSA-CRT method.

$m$

101

102

103

104

105

106

107

Fig. 1

Fig. 2

301 —

302 —

303 —

Tous les messages
ont été signés ?

non

oui

304 —

Fig. 3

410      470

X

430

Y

450

440      460

420      480

(a)

430

440

(b)

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100223478 A